# EUROPÄISCHE PATENTSCHRIFT

(11) **EP 1 419 321 B1**
(45) Veröffentlichungstag und Bekanntmachung des Hinweises auf die Patenterteilung: **12.10.2005**
(21) Anmeldenummer: 02758155.2
(22) Anmeldetag: 20.08.2002
(51) Int. Cl.: F16C 11/06

(54) **KUGELGELENK**
BALL AND SOCKET JOINT
ROTULE

(30) Priorität: 24.08.2001 DE 10140683
(43) Veröffentlichungstag der Anmeldung: 19.05.2004
(73) Patentinhaber: ZF Lemförder Metallwaren AG, 49441 Lemförde (DE)
(72) Erfinder: BRUNNEKE, Hans-Gerd, 49074 Osnabrück (DE); KUNZE, Ralf, 49152 Bad Essen (DE)
(86) Internationale Anmeldenummer: PCT/DE2002/003101
(87) Internationale Veröffentlichungsnummer: WO 2003/019022

(56) Entgegenhaltungen:
- EP-A- 0 632 207
- EP-A- 1 042 155
- DE-C- 19 546 084
- SU-A- 815 332
- PATENT ABSTRACTS OF JAPAN vol. 005, no. 050 (M-062), 9. April 1981 (1981-04-09) -& JP 56 006911 A (HINO MOTORS LTD), 24. Januar 1981 (1981-01-24)

## Beschreibung

Die Erfindung betrifft ein Kugelgelenk für ein Kraftfahrzeug, insbesondere für das Fahrwerk des Kraftfahrzeugs, mit einem eine Gelenköffnung aufweisenden Kugelgelenkgehäuse, in dem eine aus einem isolierenden Material hergestellte Lagerschale angeordnet ist, einem aus einem elektrisch leitenden Material hergestellten, eine Gelenkkugel und einen Zapfen aufweisenden Kugelzapfen, der mit seiner Gelenkkugel in der Lagerschale drehbar und schwenkbar gelagert ist und mit seinem Zapfen durch die Gelenköffnung hindurch aus dem Kugelgelenkgehäuse herausragt.

Ein derartiges Kugelgelenk ist in der deutschen Patentanmeldung DE 100 09 054.0 beschrieben, wobei das aus elektrisch leitendem Material hergestellte Kugelgelenkgehäuse und der Kugelzapfen über elektrische Leitungen mit einer Auswerteeinheit verbunden sind, mittels der ein übermäßiger Verschleiß der Lagerschale erfasst werden kann, der durch den unmittelbaren Kontakt der Gelenkkugel mit dem Kugelgelenkgehäuse gekennzeichnet ist.

Aus der DE 199 18 869 A1 ist ein Kugelgelenk für Fahrzeugachsschenkel bekannt, welches ein Gelenkgehäuse und einen Gelenkzapfen aufweist, der mittels einer kugelförmigen Lagerfläche in einer zweiteiligen, vorzugsweise aus einem polymeren Material ausgebildeten Lagerschale dreh- und auslenkbar gelagert ist, wobei die Lagerschale ihrerseits im Gelenkgehäuse angeordnet ist. In eine am Gehäuse festgelegte Dichtscheibe ist mit Vorspannung gegen die Lagerschale ein Verschleißanzeigeeinsatz eingesetzt, welcher im unverschlissenen Zustand des Kugelgelenks an der der Lagerschale abgewandten Seite der Dichtscheibe aus dieser herausragt. Mit zunehmendem Verschleiß des Kugelgelenks nimmt diese Vorspannung ab, so dass sich der Verschleißanzeigeeinsatz von einer Bedienperson bewegen und von der der Lagerschale abgewandten Seite der Dichtscheibe her in diese hineindrücken lässt. Wenn sich der Verschleißanzeigeeinsatz bewegen oder derart weit in die Dichtscheibe hineindrücken lässt, dass dieser nicht mehr an der der Lagerschale abgewandten Seite der Dichtscheibe aus dieser herausragt, ist dies ein Anzeichen dafür, dass das Kugelgelenk verschlissen ist.

Des Weiteren offenbart die JP 56 006 911 A bereits ein Kugelgelenk für ein Kraftfahrzeug, mit einem eine Gelenköffnung aufweisenden Kugelgelenkgehäuse, in dem eine aus einem isolierenden Material hergestellte Lagerschale angeordnet ist. In dieser Lagerschale ist ein aus einem elektrisch leitenden Material hergestellter, eine Gelenkkugel und einen Zapfen aufweisender Kugelzapfen mit seiner Gelenkkugel drehbar und schwenkbar gelagert. Der Zapfen ragt durch die Gelenköffnung aus dem Kugelgelenkgehäuse heraus. In der Wandung der Lagerschale ist im Abstand zu der Gelenkkugel eine Ringelektrode auf dem Äquatorialdurchmesser der Gelenkkugel angeordnet, wobei die Ringelektrode und die Gelenkkugel über die Lagerschale gegeneinander elektrisch isoliert sind. Nachteilig an der Ausführung der Elektrode als Ringelektrode im Bereich des Äquatorialdurchmessers der Gelenkkugel ist insbesondere, dass mit dieser Anordnung keine für jedes Kugelgelenk an die Hauptbelastungsrichtung angepasste Erfassung des Verschleißes möglich ist und eine Schwächung der Lagerschale über den gesamten Durchmesser erfolgt. Zudem wird in dieser Offenbarung keine elektrische Isolierung gegenüber zapfenseitig an das Kugelgelenk angebundenen Kraftfahrzeugbauteilen offenbart, so dass keine sichere Funktion der Verschließanzeige gewährleistet ist.

Aufgabe der Erfindung ist es, ein Kugelgelenk, bei dem ein übermäßiger Verschleiß der Lagerschale auf einfache Art und Weise erfasst werden kann, dahingehend zu verbessern, dass eine sichere Funktion der Verschleißanzeige bei gleichzeitig einfacher Anordnung ermöglicht wird, ohne dass eine Bedienperson eine manuelle Prüfung am Ort des Kugelgelenks vornehmen muss.

Diese Aufgabe wird erfindungsgemäß durch ein Kugelgelenk mit den Merkmalen nach Patentanspruch 1 gelöst. Bevorzugte Weiterbildungen sind in den Unteransprüchen beschrieben.

Es wird ein Kugelgelenk für ein Kraftfahrzeug geschaffen, insbesondere für das Fahrwerk des Kraftfahrzeugs, wobei das Kugelgelenk ein eine Gelenköffnung aufweisendes Kugelgelenkgehäuse, in dem eine aus einem isolierenden Material hergestellte Lagerschale angeordnet ist und einen aus einem elektrisch leitenden Material hergestellten und eine Gelenkkugel und einen Zapfen aufweisenden Kugelzapfen aufweist, der mit seiner Gelenkkugel in der Lagerschale drehbar und schwenkbar gelagert ist und mit seinem Zapfen durch die Gelenköffnung hindurch aus dem Kugelgelenkgehäuse herausragt. In der Wandung der Lagerschale ist eine Elektrode im Abstand zu der Gelenkkugel angeordnet, wobei die Elektrode und die Gelenkkugel über die unverschlissene Lagerschale gegeneinander elektrisch isoliert sind. Die im Fahrwerk eines Kraftfahrzeugs verwendeten Bauteile sind üblicherweise aus einem metallischen Werkstoff und somit aus einem elektrisch leitenden Material hergestellt. Dies kann zu dem unerwünschten Effekt führen, dass die Elektrode und der Kugelzapfen des im Fahrwerk montierten Kugelgelenks mittelbar über die Fahrwerksteile elektrisch miteinander verbunden sind, falls das Kugelgelenkgehäuse aus einem elektrisch leitenden Material hergestellt und die Elektrode nicht gegenüber dem Kugelgelenkgehäuse elektrisch isoliert ist. Erfindungsgemäß ist daher der Zapfen des Kugelgelenkes zumindest an seinem der Gelenkkugel abgewandten Endbereich ringförmig von elektrisch isolierendem Material umschlossen. Somit ist eine elektrisch isolierende Schicht zwischen dem Kugelzapfen und dem Fahrwerksteil vorhanden, an dem der Zapfen befestigt ist, wodurch eine unmittelbare elektrische Verbindung zwischen dem Kugelzapfen und diesem Fahrwerksteil sicher verhindert ist.

Im unverschlissenen Zustand der Lagerschale befindet sich zwischen der Elektrode und der Gelenkkugel elektrisch isolierendes Material der Lagerschale, welches die Gelenkkugel gegenüber der Elektrode elektrisch isoliert. Die zum Zeitpunkt der Herstellung festgelegte Dicke des zwischen der Elektrode und der Gelenkkugel vorhandenen Materials der Lagerschale wird mit zunehmendem Verschleiß geringer, bis die Gelenkkugel die Elektrode unmittelbar berührt. Dieser Berührungszustand kann mittels einer elektrischen Auswerteeinrichtung gemessen werden, die sowohl mit der Elektrode als auch mit dem Kugelzapfen über elektrische Leitungen verbunden ist.

Mit Hilfe einer Auswerteeinrichtung kann ein Signal an den Fahrzeugführer abgegeben werden, indem ein optischer oder akustischer Signalgeber im Fahrzeuginnenraum aktiviert wird, wenn sich die Gelenkkugel und die Elektrode berühren. Im Falle des Bestehens eines elektrischen Kontaktes zwischen der Elektrode und der Gelenkkugel ist es aber auch möglich, ein Signal an einen im Kraftfahrzeug vorgesehenen Digitalrechner oder eine andere, auslesbare Informationen speichernde Einrichtung abzugeben, so dass eine den Verschleiß des Kugelgelenks kennzeichnende Information in dem Speicher abgelegt wird, welche zum Beispiel im Falle von Wartungsarbeiten abgefragt oder beispielsweise auch über ein Funksignal an einen anderenorts befindlichen Empfänger (zum Beispiel zu einer Werkstatt oder dem Kraftfahrzeughersteller) übertragen werden kann.

Über die Dicke des zwischen der Elektrode und der Gelenkkugel vorhandenen Materials der Lagerschale zum Zeitpunkt der Herstellung des Kugelgelenks kann festgelegt werden, wie viel Material von der Lagerschale abgetragen werden kann, bis der Kontakt zwischen der Gelenkkugel und der Elektrode geschlossen wird und die Lagerschale als verschlissen gilt.

Die über elektrische Leitungen mit dem erfindungsgemäßen Kugelgelenk verbindbare oder verbundene elektrische Auswerteeinrichtung kann in Entfernung zum Ort des Kugelgelenks angeordnet sein, so dass ein übermäßiger Verschleiß der Lagerschale auf einfache Art und Weise erfasst werden kann, ohne dass eine Bedienperson eine manuelle Prüfung am Ort des Kugelgelenks vornehmen muss.

Die Elektrode kann als in der Lagerschale angeordneter Stift ausgebildet sein. Dieser ist als zylinderförmiger oder als in ein Gewinde einschraubbarer Stift ausführbar.
Bevorzugt wird die Elektrode aber als ringförmige Elektrode (Ringelektrode) ausgebildet, so dass die Verschleißüberwachung unabhängig von der Hauptbelastungsrichtung des Kugelgelenks erfolgen kann. Somit muss das Kugelgelenk beim Einbau in das Fahrwerk nicht mit der Elektrode zu der Hauptbelastungsrichtung hin ausgerichtet werden. Dementsprechend ist es im Sinne der Erfindung ebenfalls möglich, mehrere, innerhalb der Lagerschale verteilt angeordnete Elektroden vorzusehen.

Weiterhin ist es möglich, die Elektrode als vom Lagerschalenmaterial eingeschlossene Folie, Leiterplatte oder als aufgedampfte beziehungsweise metallisierte Schicht auszubilden.

Falls das Kugelgelenkgehäuse aus einem elektrisch leitenden Material hergestellt und die Elektrode mit dem Kugelgelenkgehäuse elektrisch verbunden ist, kann es auch im unverschlissenen Zustand der Lagerschale zu einem elektrischen Kontakt zwischen dem Kugelzapfen und der Elektrode kommen, wenn der Kugelzapfen derart weit gegenüber dem Kugelgelenkgehäuse ausgelenkt wird, dass der zwischen der Gelenkkugel und dem Zapfen vorgesehene Übergangsbereich des Kugelzapfens an den die Gelenköffnung umgebenden Rand des Kugelgelenkgehäuses anstößt. In diesem Fall würde der elektrische Kontakt zwischen der Gelenkkugel und der Elektrode nicht unmittelbar, sondern über das Kugelgelenkgehäuse geschlossen werden, weshalb hierfür besondere Isolationsmassnahmen erforderlich sind, um dies zu vermeiden. Deshalb wird vorgeschlagen, den Kugelzapfen in dem zwischen der Gelenkkugel und dem Zapfen vorgesehenen Übergangsbereich mit einem Kragen aus elektrisch isolierendem Material zu umschließen. Somit ist das Ausbilden eines elektrischen Kontaktes zwischen dem Kugelzapfen und dem die Gelenköffnung umgebenden Rand des Kugelgelenkgehäuses sicher verhindert.

Falls der ringförmig von elektrisch isolierendem Material umschlossene Kugelzapfen über ein zusätzliches Befestigungsmittel mit einem Fahrwerksteil verbunden ist, ist auch bevorzugt dieses Befestigungsmittel gegenüber dem Kugelzapfen und/oder dem Fahrwerksteil elektrisch isoliert anzuordnen oder auszubilden. Falls zum Beispiel der Zapfen an seinem der Gelenkkugel abgewandten Ende mit einem Gewinde versehen und das Befestigungsmittel als aus einem metallischen Werkstoff hergestellte und auf das Gewinde aufschraubbare Mutter ausgebildet ist, kann zum Beispiel eine isolierende Unterlegscheibe zwischen der Mutter und dem Fahrwerksteil angeordnet werden, um einen elektrisch leitenden Kontakt zwischen der Mutter und dem Fahrwerksteil zu verhindern.

Die Elektrode kann ferner als ein mit dem Kugelgelenkgehäuse einteilig ausgebildeter Vorsprung ausgebildet sein, der im Innern des Kugelgelenkgehäuses auf die Gelenkkugel hin ausgerichtet ist. Bevorzugt ist die Elektrode aber als separates Bauteil ausgebildet, so dass die Lagerschale und die Elektrode vor der Montage der Lagerschale zu einer Baugruppe zusammengefügt werden können, welche dann in das Kugelgelenkgehäuse eingesetzt wird.

Die Elektrode kann in das Kunststoffgehäuse eingegossen sein. Bevorzugt ist die Elektrode aber in eine in der Wandung der Lagerschale vorgesehene und zum Kugelgelenkgehäuse hin offene Ausnehmung eingesetzt, wobei die Elektrode zum Beispiel mittels einer Schnappverbindung oder unter Anwendung eines Klebstoffes in der Ausnehmung fixiert ist.

Die Ausnehmung kann zur Aufnahme einer stiftförmigen Elektrode in Form einer Bohrung oder zur Aufnahme einer als Gewindestift ausgeführten Elektrode in Form eines Innengewindes ausgebildet sein. Bevorzugt ist die Ausnehmung aber eine Ringnut, so dass die Elektrode an jeder Stelle der Ringnut in diese eingesetzt werden kann. Besonders bevorzugt ist in die Ringnut aber die als Ringelektrode ausgebildete Elektrode eingesetzt.

Die Elektrode kann mit dem Kugelgelenkgehäuse im elektrischen Kontakt stehen, wobei die Kontaktierung der Elektrode über eine Kontaktierung des Kugelgelenkgehäuses erfolgen kann. Bevorzugt ist aber die Elektrode gegenüber dem Kugelgelenkgehäuse elektrisch isoliert, so dass auf eine elektrische Isolierung des Kugelzapfens gegenüber dem Kugelgelenkgehäuse und/oder gegenüber einem mit dem Kugelgelenk verbundenen Fahrwerksteil verzichtet werden kann. Ferner kann ein in den Innenraum des Kugelgelenks eingebrachtes Schmiermittel die Verschleißmessung nicht mehr negativ beeinflussen, falls das Kugelgelenkgehäuse aus einem elektrisch leitenden Material hergestellt ist, da das Auftreten von die Verschleißmessung verfälschenden Kriechströmen zwischen der Elektrode und der Gelenkkugel über das Kugelgelenkgehäuse und das Schmiermittel vor dem Eintreten des vollständigen Verschleißzustandes nun sicher verhindert ist. Der vollständige Verschleißzustand ist dabei durch den unmittelbaren elektrischen Kontakt zwischen der Elektrode und der Gelenkkugel gekennzeichnet.

Eine zum Kontaktieren der Elektrode erforderliche elektrische Leitung kann über die Gelenköffnung aus dem Kugelgelenkgehäuse herausgeführt werden. Um zu verhindern, dass unerwünschte Fremdstoffe in diese Gelenköffnung eindringen können, sollten selbstverständlich entsprechende Abdichtungsmaßnshmen gegenüber der Umgebung vorgesehen werden.

Ebenfalls denkbar ist die Anbringung einer beispielsweise als Steckerverbindung ausgeführten Kontaktanordnung am Kugelgelenkgehäuse. Bevorzugt ist in dem Gehäuse aber eine Durchführung vorgesehen, durch welche hindurch sich eine an der Elektrode angeschlossene und gegenüber dem Kugelgelenkgehäuse elektrisch isolierte elektrische Leitung aus dem Kugelgelenkgehäuse heraus erstreckt. Somit muss die elektrische Leitung nicht durch einen Dichtungsbalg hindurchgeführt oder mit einer der Dichtflächen eines Dichtungsbalges in Kontakt gebracht werden, wodurch mögliche Dichtigkeitseinbußen im Bereich der Gelenköffnung verhindert werden können.

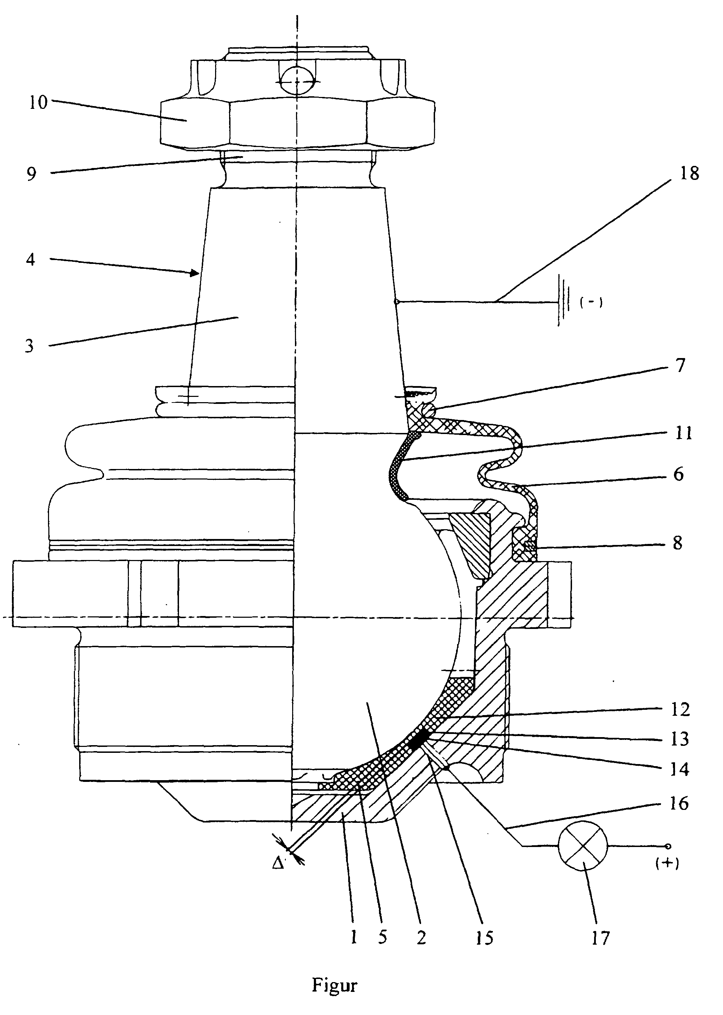

Die Erfindung wird anhand einer bevorzugten Ausführungsform unter Bezugnahme auf die Zeichnung beschrieben. In der Zeichnung zeigt die
- Figur: eine teilweise geschnittene Ansicht einer Ausführungsform des erfindungsgemäßen Kugelgelenkes.

Aus der Figur ist eine teilweise geschnittene Ansicht einer Ausführungsform des erfindungsgemäßen Kugelgelenks ersichtlich. In einem Kugelgelenkgehäuse 1 ist ein eine Gelenkkugel 2 und einen Zapfen 3 aufweisender Kugelzapfen 4 in einer Lagerschale 5 drehbar und schwenkbar gelagert. Zwischen dem Kugelgelenkgehäuse 1 und dem Kugelzapfen 4 ist ein Dichtungsbalg 6 angeordnet, der mit seinem einem Ende an dem Kugelgelenkgehäuse 1 und mit seinem anderen Ende an dem Zapfen 3 dichtend anliegt und ein Eindringen von Schmutz und Wasser in das Innere des Kugelgelenkgehäuses 1 verhindert. Die beiden Enden des Dichtungsbalgs 6 sind dabei jeweils über einen Spannring 7 und 8 zentripetal vorgespannt. An dem der Gelenkkugel 2 abgewandten Endbereich des Zapfens 3 ist ein Gewinde 9 ausgebildet, auf welches eine Mutter 10 aufgeschraubt ist. Ferner ist im Übergangsbereich zwischen der Gelenkkugel 2 und dem Zapfen 3 der Kugelzapfen 4 von einem Kragen 11 aus einem elektrisch isolierenden Material umschlossen.

In der Wandung 12 der Lagerschale 5 ist eine zum Kugelgelenkgehäuse 1 hin offene Ausnehmung 13 vorgesehen, in welche eine Elektrode 14 eingesetzt und über einen Klebstoff fixiert ist. Die Elektrode 14 ist über eine durch eine im Kugelgelenkgehäuse 1 vorgesehene Durchführung 15 hindurchgeführte erste elektrische Leitung 16 mit einer Glühlampe 17 (oder einem anderen optischen Signalgeber) elektrisch verbunden, deren anderer Anschluss an den positiven Pol (+) einer Spannungsquelle angeschlossen ist. Sowohl die erste elektrische Leitung 16 als auch die Elektrode 14 sind dabei gegenüber dem Kugelgelenkgehäuse 1 elektrisch isoliert ausgebildet.

Der Kugelzapfen 4 ist mit seinem Zapfen 3 über eine zweite elektrische Leitung 18 an den Minuspol (-) der Spannungsquelle angeschlossen, so dass im Falle einer elektrischen Verbindung von dem Kugelzapfen 4 mit der Elektrode 14 ein geschlossener elektrischer Stromkreis ausgebildet wird und die Glühlampe 17 zu leuchten beginnt.

Über die Dicke Δ des zwischen der Elektrode 14 und der Gelenkkugel 2 liegenden Bereiches der Lagerschale 5 zum Zeitpunkt der Herstellung des Kugelgelenks kann der maximal zulässige Verschleiß der Lagerschale 5 festgelegt werden. Mit zunehmendem Verschleiß wird der Abstand Δ nämlich immer geringer, bis schließlich ein elektrischer Kontakt zwischen der Gelenkkugel 2 und der Elektrode 14 ausgebildet wird. In diesem Moment wird der elektrische Stromkreis geschlossen, so dass die Glühlampe 17 zu leuchten beginnt. Ist die Glühlampe 17 im Innraum des Kraftfahrzeugs angeordnet, so kann der Fahrzeugführer am Leuchten der Glühlampe 17 feststellen, dass die Lagerschale 5 des Kugelgelenks verschlissen ist.

### Bezugszeichenliste:

- 1: Kugelgelenkgehäuse
- 2: Gelenkkugel
- 3: Zapfen
- 4: Kugelzapfen
- 5: Lagerschale
- 6: Dichtungsbalg
- 7: Spannring
- 8: Spannring
- 9: Gewinde
- 10: Mutter
- 11: Kragen
- 12: Wandung
- 13: Ausnehmung
- 14: Elektrode
- 15: Durchführung
- 16: erste elektrische Leitung
- 17: Glühlampe
- 18: zweite elektrische Leitung
- Δ: Abstand

## Patentansprüche

1. Kugelgelenk für ein Kraftfahrzeug, insbesondere für das Fahrwerk des Kraftfahrzeugs, mit einem eine Gelenköffnung aufweisenden Kugelgelenkgehäuse (1), in dem eine aus einem isolierenden Material hergestellte Lagerschale (5) angeordnet ist, einem aus einem elektrisch leitenden Material hergestellten, eine Gelenkkugel (2) und einen Zapfen (3) aufweisenden Kugelzapfen (4), der mit seiner Gelenkkugel (2) in der Lagerschale (5) drehbar und schwenkbar gelagert ist und mit seinem Zapfen (3) durch die Gelenköffnung hindurch aus dem Kugelgelenkgehäuse (1) herausragt, wobei in der Wandung (12) der Lagerschale (5) eine Elektrode (14) im Abstand zu der Gelenkkugel (2) angeordnet ist und die Elektrode (14) und die Gelenkkugel (2) über die Lagerschale (5) gegeneinander elektrisch isoliert sind, **dadurch gekennzeichnet, dass**
der Zapfen (3) zumindest an seinem der Gelenkkugel (2) abgewandten Endbereich ringförmig von elektrisch isolierendem Material umschlossen ist.

2. Kugelgelenk nach Anspruch 1, **dadurch gekennzeichnet, dass** die Elektrode (14) ringförmig ausgebildet ist.

3. Kugelgelenk nach Anspruch 1 oder 2, **dadurch gekennzeichnet, dass** der Kugelzapfen (4) im Übergangsbereich zwischen der Gelenkkugel (2) und dem Zapfen (3) von einem Kragen (11) aus elektrisch isolierendem Material umschlossen ist.

4. Kugelgelenk nach einem der Ansprüche 1 bis 3, **dadurch gekennzeichnet, dass** die Elektrode (14) als separates Bauteil ausgebildet ist.

5. Kugelgelenk nach einem der Ansprüche 1 bis 4, **dadurch gekennzeichnet, dass** die Elektrode (14) als vom Lagerschalenmaterial eingeschlossene Folie, Leiterplatte oder als aufgedampfte beziehungsweise metallisierte Schicht ausgebildet ist.

6. Kugelgelenk nach einem der Ansprüche 1 bis 5, **dadurch gekennzeichnet, dass** in der Wandung (12) der Lagerschale (5) eine zum Kugelgelenkgehäuse (1) hin offene Ausnehmung (13) vorgesehen ist, in welche die Elektrode (14) eingesetzt ist.

7. Kugelgelenk nach Anspruch 6, **dadurch gekennzeichnet, dass** die Ausnehmung (13) als Ringnut ausgebildet ist.

8. Kugelgelenk nach einem der Ansprüche 1 bis 7, **dadurch gekennzeichnet, dass** die Elektrode (14) gegenüber dem Kugelgelenkgehäuse (1) elektrisch isoliert ist.

9. Kugelgelenk nach einem der Ansprüche 1 bis 8, **dadurch gekennzeichnet, dass** in dem Kugelgelenkgehäuse (1) eine Durchführung (15) vorgesehen ist, durch welche hindurch sich eine an der Elektrode (14) angeschlossene und gegenüber dem Kugelgelenkgehäuse (1) elektrisch isolierte elektrische Leitung (16) aus dem Kugelgelenkgehäuse (1) heraus erstreckt.

10. Kugelgelenk nach einem der Ansprüche 1 bis 9, **dadurch gekennzeichnet, dass** das Kugelgelenk zur Speicherung der im Kugelgelenk erfassten Signale mit einer elektronischen Auswerteeinrichtung, einem Digitalrechner oder einer anderen, auslesbare Informationen speichernden Einrichtung verbunden ist oder dass die im Kugelgelenk erfassten Signale als Funksignal an einen Empfänger übertragbar sind.

## Claims

1. Ball-and-socket joint for a motor vehicle, in particular for the chassis of the motor vehicle, with a ball-and-socket joint housing (1), which comprises a joint opening and in which a bearing shell (5) made of an insulating material is disposed, and a ball pin (4) which is made of an electrically conductive material, comprises a joint ball (2) and a pin (3), is mounted so as to be rotatable and pivotable in the bearing shell (5) by way of its joint ball (2) and projects through the joint opening out of the ball-and-socket joint housing (1) by way of its pin (3), wherein an electrode (14) is disposed in the wall (12) of the bearing shell (5) at a spacing from the joint ball (2), and the electrode (14) and the joint ball (2) are electrically insulated from one another via the bearing shell (5),
**characterised in that**
the pin (3) is enclosed by electrically insulating material in the shape of a ring at least at its end area which is remote from the joint ball (2).

2. Ball-and-socket joint according to Claim 1, **characterised in that** the electrode (14) is annular.

3. Ball-and-socket joint according to Claim 1 or 2, **characterised in that** the ball pin (4) is enclosed by a collar (11) of electrically insulating material in the transition area between the joint ball (2) and the pin (3).

4. Ball-and-socket joint according to any one of Claims 1 to 3, **characterised in that** the electrode (14) is formed as a separate component.

5. Ball-and-socket joint according to any one of Claims 1 to 4, **characterised in that** the electrode (14) is formed as a foil or printed circuit board encompassed by the bearing shell material or as a vapour-deposited or metallized layer.

6. Ball-and-socket joint according to any one of Claims 1 to 5, **characterised in that** a recess (13), which is open towards the ball-and-socket joint housing (1), is provided in the wall (12) of the bearing shell (5), in which recess the electrode (14) is inserted.

7. Ball-and-socket joint according to Claim 6, **characterised in that** the recess (13) is formed as an annular groove.

8. Ball-and-socket joint according to any one of Claims 1 to 7, **characterised in that** the electrode (14) is electrically insulated with respect to the ball-and-socket joint housing (1).

9. Ball-and-socket joint according to any one of Claims 1 to 8, **characterised in that** a lead-through (15) is provided in the ball-and-socket joint housing (1), through which lead-through an electric line (16), connected to the electrode (14) and electrically insulated with respect to the ball-and-socket joint housing (1), extends out of the ball-and-socket joint housing (1).

10. Ball-and-socket joint according to any one of Claims 1 to 9, **characterised in that**, in order to store the signals detected in the ball-and-socket joint, the ball-and-socket joint is connected to an electronic evaluation device, a digital computer or another device storing information which can be read out, or that the signals detected in the ball-and-socket joint can be transmitted as a radio signal to a receiver.

## Revendications

1. Articulation à rotule pour un véhicule automobile, en particulier pour le mécanisme de roulement d'un véhicule automobile, du type comportant un boîtier (1) de l'articulation à rotule muni d'une ouverture d'articulation, dans lequel est agencé un coussinet (5) réalisé en matériau isolant, et un pivot à rotule (4) réalisé en matériau électroconducteur et comportant une rotule (2) et une tige (3), dont la rotule (2) est logée de manière rotative et pivotante dans le coussinet (5) et dont le pivot dépasse hors du boîtier (1) de l'articulation à rotule à travers l'ouverture d'articulation, une électrode (14) étant agencée à distance par rapport à la rotule (2) dans la paroi (12) du coussinet (5) et l'électrode (14) et la rotule (2) étant isolées électriquement l'une par rapport à l'autre par l'intermédiaire du coussinet (5), **caractérisée en ce que** la tige (3), au moins sur sa zone d'extrémité opposée à la rotule (2), est entourée de manière annulaire par un matériau électro-isolant.

2. Articulation à rotule selon la revendication 1, **caractérisée en ce que** l'électrode (14) est conçue sous forme annulaire.

3. Articulation à rotule selon la revendication 1 ou 2, **caractérisée en ce que** le pivot à rotule (4), dans la zone de transition entre la rotule (2) et la tige (3), est entouré par un col (11) en matériau électro-isolant.

4. Articulation à rotule selon l'une quelconque des revendications 1 à 3, **caractérisée en ce que** l'électrode (14) est conçue sous forme de pièce séparée.

5. Articulation à rotule selon l'une quelconque des revendications 1 à 4, **caractérisée en ce que** l'électrode (14) est conçue sous forme de feuille, de plaquette conductrice, incluse dans la matière du coussinet, ou sous forme de couche déposée par métallisation sous vide ou par métallisation.

6. Articulation à rotule selon l'une quelconque des revendications 1 à 5, **caractérisée en ce qu'**un évidement (13), ouvert vers le boîtier (1) de l'articulation à rotule, est prévu dans la paroi (12) du coussinet (5), dans lequel est insérée l'électrode (14).

7. Articulation à rotule selon la revendication 6, **caractérisée en ce que** l'évidement (13) est conçu sous forme de rainure annulaire.

8. Articulation à rotule selon l'une quelconque des revendications 1 à 7, **caractérisée en ce que** l'électrode (14) est isolée électriquement par rapport au boîtier (1) de l'articulation à rotule.

9. Articulation à rotule selon l'une quelconque des revendications 1 à 8, **caractérisée en ce que**, dans le boîtier (1) de l'articulation à rotule, il est prévu un passage (15) à travers lequel passe une ligne électrique (16), qui est raccordée à l'électrode (14) et est isolée électriquement par rapport au boîtier (1) de l'articulation à rotule et qui s'étend hors du boîtier (1) de l'articulation à rotule.

10. Articulation à rotule selon l'une quelconque des revendications 1 à 9, **caractérisée en ce que**, pour la mémorisation des signaux détectés dans l'articulation à rotule, cette dernière est reliée à un dispositif de détection électronique, un calculateur numérique ou un autre dispositif mémorisant des informations lisibles, ou **en ce que** les signaux détectés dans l'articulation à rotule peuvent être transmis sous forme de signal radio vers un récepteur.
